# EUROPÄISCHE PATENTSCHRIFT

(11) **EP 1 103 659 B1**
(45) Veröffentlichungstag und Bekanntmachung des Hinweises auf die Patenterteilung: **23.04.2008**
(21) Anmeldenummer: 00125724.5
(22) Anmeldetag: 24.11.2000
(51) Int. Cl.: E01C 19/42, E02B 3/12, B62D 11/20

(54) **Gleitschalungsfertiger**
Slipform machine
Machine à coffrage glissant

(30) Priorität: 26.11.1999 DE 19957048
(43) Veröffentlichungstag der Anmeldung: 30.05.2001
(60) Teilanmeldung: 04105768.8
(73) Patentinhaber: Wirtgen GmbH, 53578 Windhagen (DE)
(72) Erfinder: Smolders, Raymond, 2200 Herentals (BE); Holger, Thieme, 53560 Kalenborn (DE)
(74) Vertreter: Dallmeyer, Georg

(56) Entgegenhaltungen:
- EP-A- 0 893 539
- EP-A- 1 039 037
- DE-A- 19 814 052
- GB-A- 942 349
- US-A- 3 392 797
- US-A- 3 540 359
- US-A- 3 710 695
- US-A- 4 029 165
- US-A- 4 789 266

## Beschreibung

Die Erfindung betrifft einen Gleitschalungsfertiger nach dem Oberbegriff des Anspruchs 1.

Derartige Gleitschalungsfertiger werden benötigt, um beispielsweise Straßendecken aus Beton oder neben der Fahrbahn, Kanäle, Leitwände oder Wasserrinnen aus Beton herzustellen. Bekannte Gleitschalungsfertiger weisen einen Maschinenrahmen mit einem Fahrwerk aus mehreren Fahrschiffen mit Hubsäulen und lenkbaren Kettenlaufwerken auf. Unterschiedliche Arbeitseinrichtungen zum Verteilen und Glätten oder Formen des Betons können an dem Maschinenrahmen befestigt werden.

Ein gattungsgemäßer Gleitschalungsfertiger ist beispielsweise aus der GB 942 349 bekannt. Der Gleitschalungsfertiger ist eine Bordsteingleitschalungsmaschine, die zur Bildung eines Bordsteins am hinteren Ende der Maschine eine Gleitschalung aufweist. Am vorderen Ende der Maschine ist ein quer zur Arbeitsrichtung verschiebbarer Balken vorgesehen, der nach dem Lösen von der Befestigungseinrichtung quer zur Arbeitsrichtung verschiebbar ist. An den Enden des Querbalkens sind Hubsäulen befestigt, die sich auf den Vorderrädern abstützen. Nachteilig dabei ist, dass zwar die Spurlage der Vorderräder veränderlich ist, nicht jedoch die Spurweite an spezielle Erfordernisse anpassbar ist.

Die DE 198 14 052 A beschreibt einen Gleitschalungsfertiger mit einem quer zur Arbeitsrichtung teleskopierbaren Rahmen, an dem in der Spurweite verstellbare Kettenlaufwerke angelenkt sind. Dabei können die Kettenlaufwerke mit Hilfe einer parallelogrammartigen Schwenkeinrichtung verschwenkt werden.

Der Erfindung liegt die Aufgabe zugrunde, einen Gleitschalungsfertiger der eingangs genannten Art zu schaffen, dessen Stabilität, Traktion, Richtungsstabilität und Manövrierfähigkeit beim Offset-Einbau verbessert ist.

Zur Lösung dieser Aufgabe dienen die Merkmale des Anspruchs 1.

Die Erfindung sieht vor, dass das Fahrwerk mehrere Fahrschiffe mit lenkbarem Kettenlaufwerk aufweist und dass die, in Arbeitsrichtung gesehen, vorderen Fahrschiffe mit Hilfe jeweils einer parallelogrammartigen Schwenkeinrichtung an den äußeren Enden der Schiebetraverse angelenkt sind.

Bei einem Offset-Einbau sind die Betonschalungen an den Seiten des Gleitschalungsfertigers angebracht. Dadurch, dass die für den Einbau benötigten Arbeitsgerätschaften, z.B. Betonschalungen seitlich neben dem Gleitschalungsfertiger eingesetzt werden, können hohe Giermomente auf den Maschinenrahmen des Gleitschalungsfertigers einwirken, so dass dessen Stabilität, Traktion und Richtungsstabilität beeinträchtigt ist. Die Erfindung ermöglicht es, bei einem Offset-Einbau ein Kettenlaufwerk neben der seitlich von dem Maschinenrahmen verlaufenden Aussenseite der Einbaubahn anzuordnen. Dadurch wird der Maschinenrahmen relativ zu den einwirkenden Kräften stabiler abgestützt und der Maschinenrahmen richtungstabil gehalten. Mit Hilfe der Schiebetraverse kann die Spurlage in einem weiten Bereich verstellt werden, so dass die Breite eines Hindernisses wie z.B. eine vorverlegte Betonbewehrung oder ein Wassergraben seitlich neben dem Gleitschalungsfertiger beispielsweise bis zu zwei Meter betragen kann. Das Fahrschiff kann bis zu einer solchen Breite noch jenseits des Hindernisses betrieben werden.

Zumindest die in Arbeitsrichtung vorderen Fahrschiffe sind in der Spurweite verstellbar, so dass in Kombination mit der Spurlagenverschiebung die Fahrschiffe äußerst flexibel positioniert werden können. Damit ist ein Anpassen der Spurweite an die Arbeitsbreite der Arbeitseinrichtungen zwischen den vorderen und hinteren Fahrschiffen unter Verbesserung der Stabilität möglich.

Der erfindungsgemässe Gleitschalungsfertiger ist daher äusserst flexibel an unterschiedliche Einbauanforderungen anpassbar und kann in kürzester Zeit auf eine Offset-Einbauanforderung umgestellt werden.

Die Schiebetraverse trägt gemäß einem bevorzugten Ausführungsbeispiel der Erfindung eine im wesentlichen in der Ebene des Maschinenrahmens verschwenkbare Schwenkeinrichtung für eine Fördereinrichtung. Eine derartige Anbringung der Schwenkeinrichtung hat den Vorteil, daß kein Umbau erforderlich ist, wenn die Fahrschiffe in eine andere Spurlage gebracht werden, da die Fördereinrichtung mit der Schiebetraverse mitbewegt wird. Das ist möglich, weil die Andienung grundsätzlich zwischen den Fahrwerken erfolgt und hat den Vorteil, daß keine zusätzlichen Giermomente auf den Maschinenrahmen wirken, die aus der Fördereinrichtung resultieren. Darüber hinaus bietet die Schwenkeinrichtung den Vorteil, innerhalb der gewählten Spurlage die Fördereinrichtung an die gewünschte Stelle zu verschwenken.

Zusätzlich kann vorgesehen sein, daß die Schwenkeinrichtung der Fördereinrichtung auf der Schiebetraverse quer zur Arbeitsrichtung verschiebbar angeordnet ist. Diese Möglichkeit erhöht nochmals die Flexibilität des Einsatzes der Fördereinrichtung und vergrößert den Einstellbereich, z.B. die Ausladung für die Fördereinrichtung.

Die Fördereinrichtung ist dabei an dem freien Ende der Schwenkeinrichtung, die vorzugsweise aus einer Parallelogrammführung besteht, um eine orthogonal zur Ebene des Maschinenrahmens verlaufende Achse schwenkbar gelagert. Außerdem kann vorgesehen sein, daß die Fördereinrichtung zum Verändern des Neigungswinkels um eine zu der Ebene des Maschinenrahmens parallele Achse schwenkbar gelagert ist. Auf diese Weise kann die Fördereinrichtung zusätzlich zu der Schwenkbewegung aufgrund der Schwenkeinrichtung sowohl seitlich relativ zur Arbeitsrichtung und auch hinsichtlich des Neigungswinkels verschwenkt werden.

Bei einer besonders bevorzugten Ausführungsform ist an dem freien Ende der Schwenkeinrichtung ein Hilfsrahmen angeordnet, in dem die Fördereinrichtung linear gleitend in Längsrichtung verschiebbar ist, so daß eine zusätzliche Positioniermöglichkeit für die Fördereinrichtung besteht.

An dem Maschinenrahmen kann auf mindestens einer Seite ein quer zur Arbeitsrichtung teleskopierbarer Hilfsrahmen zur Aufnahme von Arbeitsmitteln angeordnet sein. An diesem Hilfsrahmen können beispielsweise Betonschalungen für den Offset-Einbau zur Herstellung monolithischer Profile in vielen unterschiedlichen Formen und Größen angebaut werden.

Unter dem Maschinenrahmen kann ein Zwischenrahmen angeordnet sein. Dieser Zwischenrahmen kann um eine zentrale, orthogonal zum Maschinenrahmen verlaufende Achse um mindestens 180° verschwenkbar sein. Auf diese Weise können in dem Zwischenrahmen vorgesehene in Querrichtung zur Arbeitsrichtung teleskopierbare Stelleinrichtungen durch Verschwenken des Zwischenrahmens um 180° auf beiden Seiten der Maschine verfügbar gemacht werden.

Beispielsweise kann mit Hilfe der Stelleinrichtungen der Hilfsrahmen aus dem Zwischenrahmen teleskopierbar sein. Durch Verschwenken des Zwischenrahmens um 180° kann der Hilfsrahmen ohne umfangreiche Umbauarbeiten in kürzester Zeit auf der anderen Seite der Maschine bereitgestellt werden.

Zusätzlich kann vorgesehen sein, daß die Position des Zwischenrahmens relativ zu dem Maschinenrahmen parallel zu den Längsträgern verstellbar ist. Auch in diesem Fall kann die Positionierung von Arbeitsmitteln ohne umfangreiche Umbauarbeiten erfolgen.

Zumindest die in Arbeitsrichtung vorderen Fahrschiffe weisen ein Lenkgetriebe zum Verschwenken der Kettenlaufwerke auf, wobei der aus der Mittellage in Arbeitsrichtung einstellbare Lenkwinkel einen Betrag von ± 50° bis 60°, vorzugsweise ± 75° überschreitet.

Ein solcher Lenkwinkel ermöglicht besonders enge Kurvenradien z.B. wenn beim Offset-Einbau die Offsetmulde rechts angebaut ist und der Bahnverlauf eine Linkskurve vorsieht. Dann muß der Gleitschalungsfertiger eine besonders enge Innenkurve ausführen.

Im folgenden wird unter Bezugnahme auf die Zeichnungen ein Ausführungsbeispiel der Erfindung näher erläutert:

Es zeigen:
- Fig. 1: eine Draufsicht auf den Gleitschalungsfertiger,
- Fig. 2: eine Draufsicht gemäß Fig. 1, in der die Einstellbereiche für die Spurlage der Fahrschiffe angegeben sind,

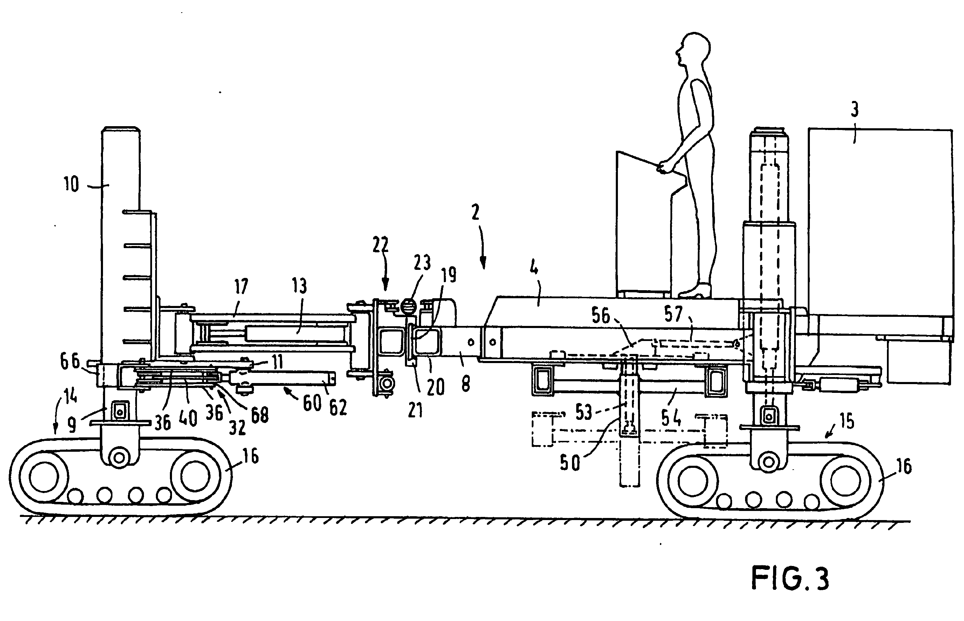

- Fig. 3: eine Seitenansicht des Gleitschalungsfertigers ohne Fördereinrichtung,
- Fig. 4: die an eine Schiebetraverse verschiebbar angeordnete Fördereinrichtung,
- Fig. 5: ein Lenkgetriebe für die Kettenlaufwerke, und
- Fign. 5a, 5b: unterschiedliche Lenkpositionen des Lenkgetriebes.

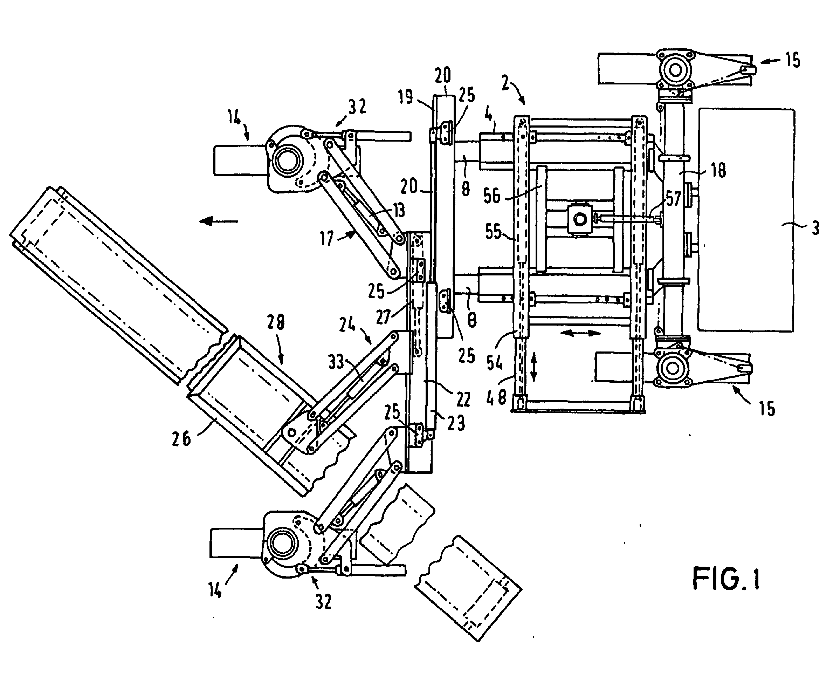

Der Gleitschalungsfertiger weist, wie aus Fig. 1 ersichtlich ist, ein Fahrwerk 2 auf, das aus einem Maschinenrahmen 4 mit parallel zur Arbeitsrichtung verlaufenden, aus dem Maschinenrahmen 4 teleskopierbaren Längsträgern 8 und aus quer zur Arbeitsrichtung verlaufenden Querträgern 18,20 besteht. Die Arbeitsrichtung ist in Fig. 1 mit einem Pfeil gekennzeichnet. Der in Arbeitsrichtung hintere Querträger 18 ist mit dem Maschinenrahmen 4 starr verbunden und nimmt in zwei vertikal zueinander versetzten Ebenen hintere Fahrschiffe 15 auf, die quer zur Arbeitsrichtung aus dem Querträger 18 teleskopierbar sind. In Arbeitsrichtung hinter dem Querträger 18 ist eine Antriebseinheit 3 mit dem Maschinenrahmen 4 verbunden, die eine hydraulische Antriebsleistung für den Vortrieb und für die Stelleinrichtungen des Gleitschalungsfertigers liefert.

Der in Arbeitsrichtung vordere Querträger 20 ist mit den teleskopierbaren Längsträgern 8 starr verbunden, die aus dem Maschinenrahmen 4 heraus in Arbeitsrichtung teleskopierbar sind, um bei Bedarf den Abstand zwischen den vorderen Fahrschiffen 14 und den hinteren Fahrschiffen 15 zu verändern und somit die Gesamtlänge des Gleitschalungsfertigers zu verändern. Der Maschinenrahmen 4 bzw. die Längsträger 8 benötigen hierzu keine Stelleinrichtung, da das Verlängern bzw. Verkürzen des Maschinenrahmens allein mit Hilfe der Fahrschiffe 14,15 erfolgen kann. Eine Sicherungskette oder ein Sicherungsseil zwischen dem hinteren Querträger 18 und dem vorderen Querträger 20 kann ein zu weites Teleskopieren der Längsträger 8 verhindern. Befinden sich die Längsträger 8 in der richtigen Position, werden Sie mit Hilfe von Bolzen in dem Maschinenrahmen 4 gesichert.

Der Maschinenrahmen 4 kann desweiteren einen Zwischenrahmen 54 aufweisen, der unterhalb des Maschinenrahmens 4 angeordnet ist und einen teleskopierbaren Hilfsrahmen 48 aufweist, der quer zur Arbeitsrichtung verfahrbar ist. Der Zwischenrahmen 54 ist dabei an einem Schlitten 56 befestigt, der mit Hilfe einer Kolben-Zylindereinheit 57 in Arbeitsrichtung vor und zurück bewegbar ist, so daß die relative Lage des Zwischenrahmens 54 mit dem Hilfsrahmen 48 zu dem Maschinenrahmen 4 veränderbar ist.

Der Hilfsrahmen 48 dient dazu, Arbeitsgerätschaften, wie beispielsweise Beton-Mulden für den Offset-Einbau seitlich an der Maschine zu befestigen und variabel in Position zu bringen. Der Zwischenrahmen 54 ist aus Vierkantprofilen gebildet in denen Kolben-Zylindereinheiten 55 befestigt sind, um den Hilfsrahmen 48 zu teleskopieren.

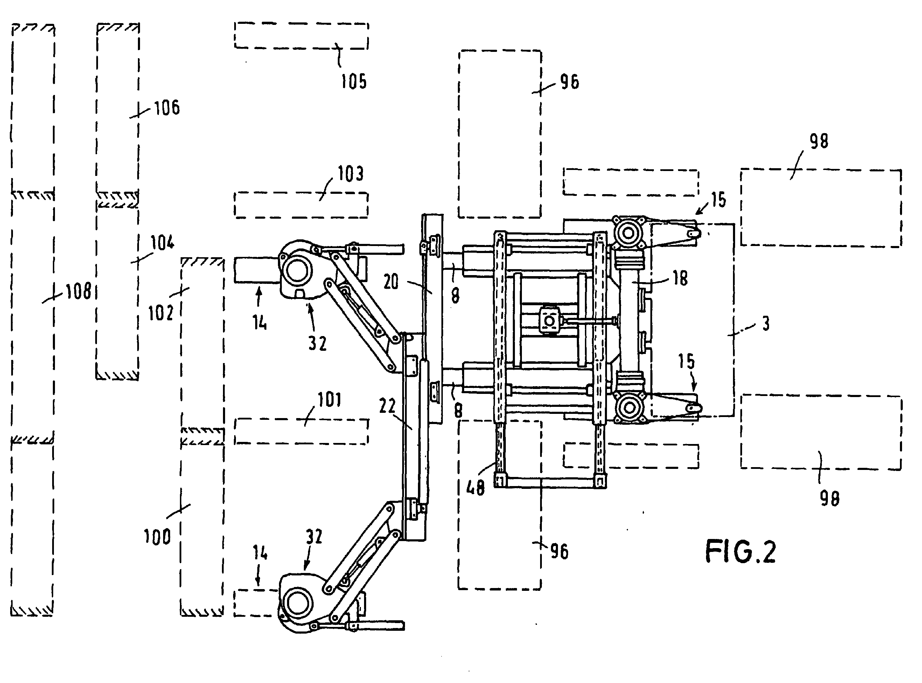

In Fig. 2 sind Bereiche 96 gekennzeichnet, die anzeigen, welche maximale Breite für den seitlichen Einbau zur Verfügung steht. Aus Fig. 2 sind auch die Einstellbereiche 98 für die in Querrichtung teleskopierbaren hinteren Fahrschiffe 15 ersichtlich. Die maximale Einbaubreite seitlich neben dem Maschinenrahmen 4 wird erzielt, wenn das jeweilige hintere Fahrschiff 15 in seiner dem Maschinenrahmen 4 nächsten Position und das entsprechend vordere Fahrschiff 14 in seiner äußersten von dem Maschinenrahmen 4 entfernten Position angeordnet ist.

Um den Hilfsrahmen 48 auch auf der gegenüberliegenden Seite des Maschinenrahmens 4 einsetzen zu können, kann der Zwischenrahmen 54 abgesenkt und um 180° verschwenkt werden. Hierzu kann der Zwischenrahmen 54 mit Hilfe einer Kolben-Zylindereinheit 53 abgesenkt werden, die sich in einer Hubsäule 50 befindet, die mit dem Zwischenrahmen 54 drehbar an dem in Arbeitsrichtung linear verschiebbaren Schlitten 56 befestigt ist. Der Zwischenrahmen 54 kann in seiner Arbeitsposition fest mit dem Maschinenrahmen 4, z.B. durch Verschraubungen verbunden werden.

An dem in Arbeitsrichtung vorderen Querträger 20 ist eine Schiebetraverse 22 angeordnet, die mit Hilfe einer Kolben-Zylindereinheit 23 parallel zum Querträger 20 verschiebbar ist. Die Schiebetraverse 22 weist hierzu ein C-Profil 21 auf, das eine frontseitig an dem Querträger 20 angeordnete Schiene 19 übergreift. Wie aus Fig. 1 ersichtlich, weist der Querträger 20 in der Nähe seiner freien Enden jeweils einen Anschlußflansch 25 für die Kolben-Zylindereinheit 23 auf. Auch die Schiebetraverse 22 weist an ihren freien Enden entsprechende Anschlußflansche 25 auf, wobei aus Fig. 1 ersichtlich ist, daß das Zylindergehäuse der Kolben-Zylindereinheit 23 für ein Verschieben der Schiebetraverse 22 nach links relativ zur Arbeitsrichtung an dem linken Anschlußflansch 25 der Schiebetraverse 22 befestigt ist, während das freie Ende des Kolbens der Kolben-Zylindereinheit 23 an den rechten Anschlußflansch 25 des Querträgers 20 befestigt ist.

Soll die Schiebetraverse 22 aus ihrer Mittellage nach rechts relativ zur Arbeitsrichtung verschoben werden, kann die gleiche Kolben-Zylindereinheit 23 verwendet werden, wenn das Zylindergehäuse der Kolben-Zylindereinheit 23 an dem linken Anschlußflansch 25 des Querträgers 20 befestigt wird, und das freien Ende Kolbenstange der Kolbenzylindereinheit 23 an dem rechten Anschlußflansch der Schiebetraverse 22.

In der Mittellage der Schiebetraverse 22 relativ zu dem Querträger 20 sind die Anschlußflansche 25 der Schiebetraverse 22 und des Querträgers 20 gegenüberliegend angeordnet, so daß ein Umbau der Kolben-Zylindereinheit 23 sehr schnell ausführbar ist. Ein derartiger Umbau ist erst dann erforderlich, wenn ein Offset-Einbau nunmehr auf der anderen Seite des Gleitschalungsfertigers erfolgen soll.

An der Schiebetraverse 22 sind an ihren äußeren Enden die vorderen Fahrschiffe 14 mit Hilfe jeweils einer parallelogrammartigen Schwenkeinrichtung 17 angelenkt. Die Schwenkeinrichtungen 17 mit zugehörigen Kolben-Zylindereinheiten 13 erlauben die Einstellung unterschiedlicher Spurweiten zwischen den beiden vorderen Fahrschiffen 14, während mit Hilfe der Schiebetraverse 22 die Spurlage variiert werden kann.

Fig. 2 zeigt die Einstellbereiche für die Spurlage der vorderen Fahrschiffe 14. Befindet sich die Schiebetraverse 22, wie in Fig. 2 ersichtlich, auf der linken Seite relativ zur Arbeitsrichtung und zum Querträger 20, so ist der Einstellbereich für das linke Fahrschiff 14 durch den Bereich 100 gekennzeichnet und der Einstellbereich für das rechte Fahrschiff durch den Bereich 102. Zusätzlich ist die äußerste linke Position 101 des rechten Fahrschiffs 14 gestrichelt angedeutet, wenn sich die Schiebetraverse 22 in ihrer linken Position befindet.

Die Bereiche 104 und 106 zeigen die Einstellbereiche für das linke bzw. rechte Fahrschiff 14, wenn die Schiebetraverse 22 sich auf der rechten Seite befindet. Die zugehörige äußerste rechte Position des linken Fahrschiffs ist durch die Position 103 in Fig. 2 gekennzeichnet, während die äußerste rechte Position des rechten Fahrschiffs 14 mit der Position 105 in Fig. 2 gekennzeichnet ist. Der in Arbeitsrichtung vorderste Bereich 108 kennzeichnet den Gesamtbereich, in dem die Spurlage der vorderen Fahrschiffe 14 eingestellt werden kann.

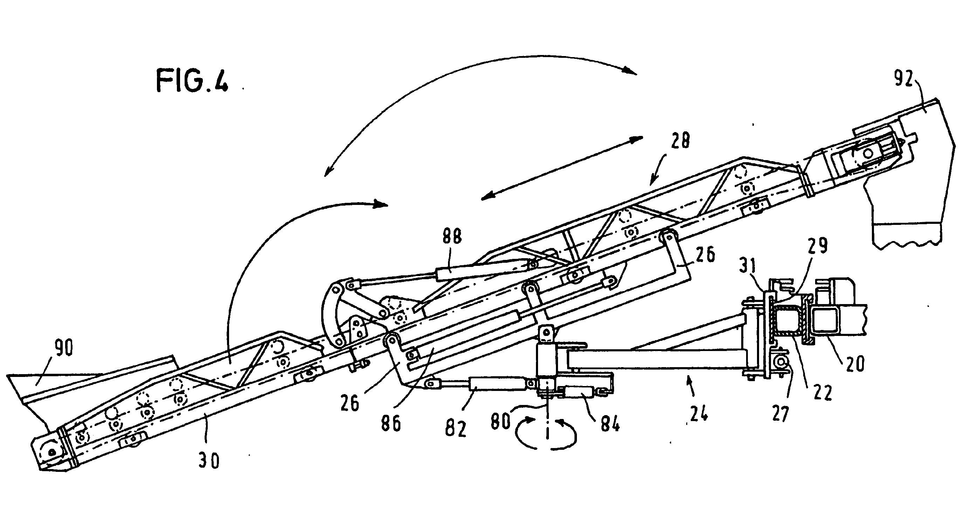

An der Schiebetraverse 22 ist desweiteren eine dritte parallelogrammartige Schwenkeinrichtung 24 angeordnet, die an ihrem freien Ende eine Fördereinrichtung 28 z.B. ein Förderband, trägt. Mit Hilfe einer Kolben-Zylindereinheit 27 kann die Schwenkeinrichtung 24 relativ zu der Schiebetraverse 22 in Querrichtung zur Arbeitsrichtung verschoben werden, um die Fördereinrichtung 28 in eine gewünschte Position zu bringen. Die Fördereinrichtung 28 ist im einzelnen in Fig. 4 dargestellt.

Die Schwenkeinrichtung 24 übergreift mit einem C-Profil 31 eine sich längs der Schiebetraverse 22 erstreckende Schiene 29 und kann mit Hilfe der Kolben-Zylindereinheit 27 längs der Schiene 29 quer zur Arbeitsrichtung verfahren werden.

Die Schwenkeinrichtung 24 besteht aus zwei parallelen Lenkern, die mit Hilfe einer Kolben-Zylindereinheit 33 schwenkbar sind, ähnlich den Schwenkeinrichtungen 17 für die Fahrschiffe 14. An dem freien Ende der Schwenkeinrichtung 24 ist ein um eine orthogonal zum Maschinenrahmen 4 verlaufende Achse 80 drehbarer Hilfsrahmen 26 angeordnet, der mit Hilfe einer Kolben-Zylindereinheit 82 in seinem Neigungswinkel verstellbar ist. Zum Verschwenken der Fördereinrichtung 28 um die Achse 80 dient eine weitere Kolben-Zylindereinheit 84. Die Fördereinrichtung 28 besteht in dem Ausführungsbeispiel aus einem Förderband, das auf dem Hilfsrahmen 26 in seiner Längsrichtung linear mit Hilfe einer Kolben-Zylindereinheit 86 verschiebbar ist. Der untere Abschnitt 30 der Fördereinrichtung 28 kann mit Hilfe einer Kolben-Zylindereinheit 88 um nahezu 180° in eine Transportstellung umgeklappt werden. An dem unteren Ende weist die Fördereinrichtung einen Aufgabetrichter 90 und an ihrem oberen Ende einen Ausgabetrichter 92 auf.

Während die hinteren Fahrschiffe mit einem herkömmlichen Lenkgetriebe versehen sind, weisen die vorderen Fahrschiffe 14 ein Lenkgetriebe 32 auf, das einen Lenkeinschlag aus der Mittellage in Arbeitsrichtung von mehr als ± 75° erlaubt. Jedes Fahrschiff 14 besteht aus einer Hubsäule 10 auf der orthogonal zum Maschinenrahmen 4 ein Kettenlaufwerk 16 nach unten ausfahrbar ist. Der ausfahrbare Teil 9 der Hubsäule 10 wird dabei von einem Lenkring 66 umgeben, der von dem Lenkgetriebe 32 betätigt wird.

Das Lenkgetriebe 32 besteht aus einer Kolben-Zylindereinheit 60 mit einem Zylindergehäuse 62 und einer Kolbenstange 64, die auf mindestens zwei kreisförmig gebogenen Lenker 36,40 einwirkt. Das Zylindergehäuse 62 ist dabei um eine orthogonal zu dem Maschinenrahmen 4 verlaufende Achse 63 gelenkig an einem mit der Hubsäule 10 verbundenen Hubsäulenflansch 11 gelagert. Das Schwenkgelenk 61 befindet sich dabei an dem der Kolbenstange 64 zugewandten Ende des Zylindergehäuses 62. An dem freien Ende der Kolbenstange 64 ist ein erstes Gelenk 68 vorgesehen, das den mit dem Lenkring 66 verbundenen Lenker 40, den Kopf der Kolbenstange 64 und das eine Ende des Lenkers 36 miteinander gelenkig verbindet. Der Lenker 36 kann in doppelter Anordnung vorgesehen sein, wobei der Lenker 40 in dem Gelenk 68 zwischen den Lenkern 36 angeordnet ist. Das freie Ende der Lenker 36 ist mit einem zweiten relativ zur Hubsäule 10 ortsfesten Gelenk 72 an dem Hubsäulenflansch 11 befestigt, während das freie Ende des Lenkers 40 über ein drittes Gelenk 76 an den Lenkring 66 angekoppelt ist. Das Lenkgetriebe 32 wird in einer orthogonal zur Achse der Hubsäule 10 verlaufenden Ebene bewegt.

Der Lenkring 66 weist zwei diametral gegenüberliegende Nutensteine 67 auf, die in einer Nut am Innenumfang des Lenkrings 66 angeordnet sind, radial nach innen vorstehen, und in entsprechende Längsnuten 65 des unteren Teils 9 der Hubsäule 10 eingreifen. Damit wird eine Lenkung des Kettenlaufwerks 16 unabhängig von der Höheneinstellung des Kettenlaufwerks 16 ermöglicht.

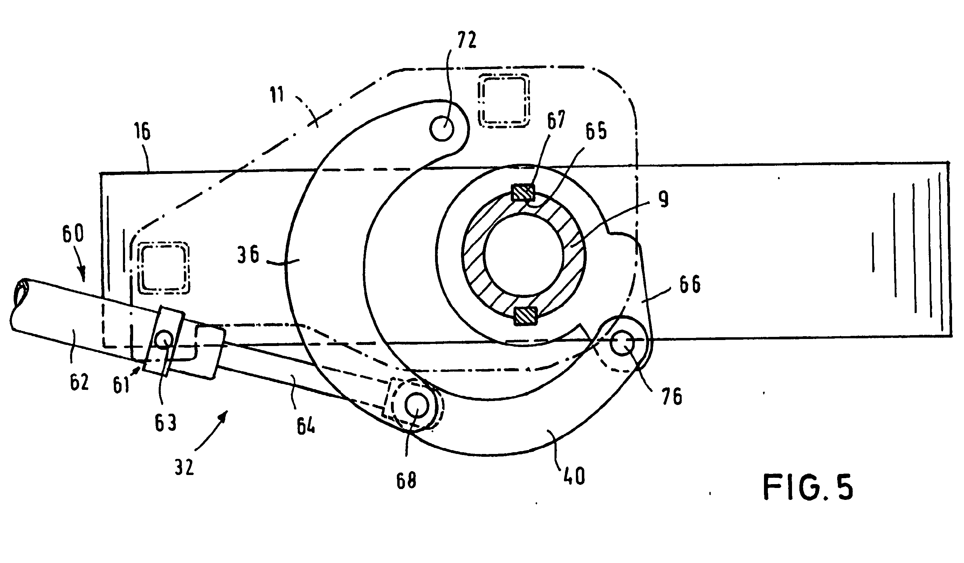

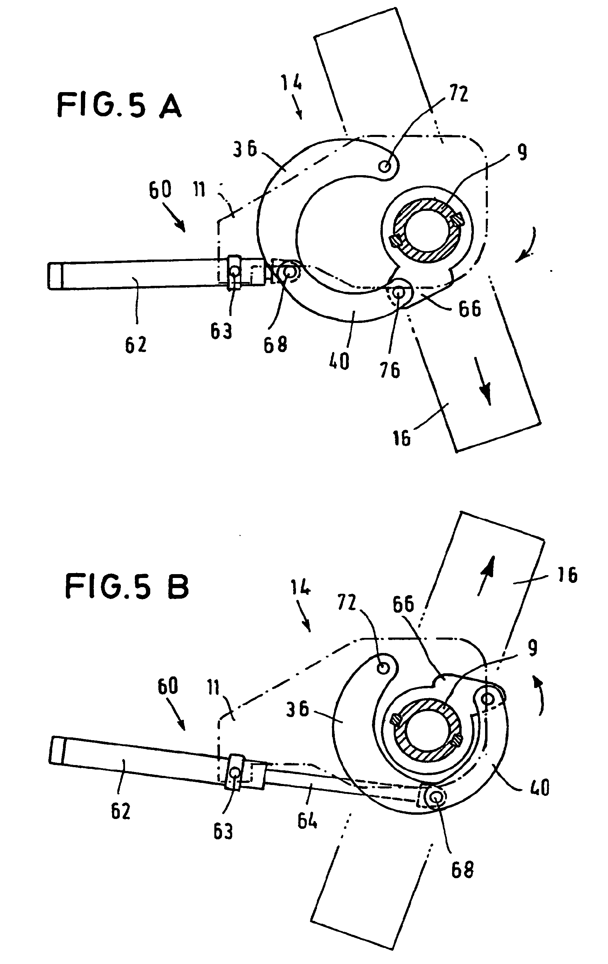

Die Fign. 5,5a,5b zeigen unterschiedliche Positionen des Lenkgetriebes 32 und den entsprechend eingestellten Lenkeinschlag des Kettenlaufwerkes 16.

Fig. 5 zeigt die Mittellage bei Geradeausfahrt parallel zu den Längsträgern 8 des Maschinenrahmens 4.

Fig. 5a zeigt einen Lenkeinschlag des Kettenlaufwerks 16 nach rechts, wobei die kreisförmig gebogenen Lenker 36,40 den unteren Teil 9 der Hubsäule eng umschließen. Die Kolbenstange 64 befindet sich dabei in ihrer eingefahrenen Position.

Fig. 5b zeigt einen Lenkeinschlag nach links, in der sich die Kolbenstange 64 in ihrer ausgefahrenen Position befindet. Die Fign. verdeutlichen den in Relation zu üblichen Lenkeinschlägen von ± 25° bis 30° erweiterten Lenkeinschlagswinkel. Der Gleitschalungsfertiger ist aufgrund der nunmehr in einem erheblich weiteren Bereich einstellbaren Lenkwinkel einfacher zu lenken und besser manövrierfähig aufgrund der möglichen engen Kurvenradien sowohl beim Umsetzen des Gleitschalungsfertigers als auch im Betrieb.

## Patentansprüche

1. Gleitschalungsfertiger mit einem Fahrwerk (2), das einen Maschinenrahmen (4) mit parallel zur Arbeitsrichtung verlaufenden Längsträgern (8) und mit Querträgern (18,20) aufweist, wobei die Ebene des Maschinenrahmens (4) mit Hilfe von Hubsäulen (10) in einer vorgegebenen Lage gehalten wird, und wobei an mindestens einem Querträger (20) des Maschinenrahmens (4) eine quer zur Arbeitsrichtung verfahrbare Schiebetraverse (22) befestigt ist,
**dadurch gekennzeichnet,**
**dass** das mit den Hubsäulen (10) höhenverstellbare Fahrwerk (2) mehrere Fahrschiffe (14, 15) mit lenkbaren Kettenlaufwerken (16) aufweist, und
**dass** die in Arbeitsrichtung gesehen vorderen Fahrschiffe (14) mit Hilfe jeweils einer parallelogrammartigen Schwenkeinrichtung (17) an den äußeren Enden der Schiebetraverse (22) angelenkt sind, so dass die Schwenkeinrichtungen (17) die Einstellung unterschiedlicher Spurweiten zwischen den vorderen Fahrschiffen (14) erlauben.

2. Gleitschalungsfertiger nach Anspruch 1, **dadurch gekennzeichnet, dass** die Längsträger (8) teleskopierbar sind und dass der in Arbeitsrichtung gesehen vordere Querträger (20) an den freien Enden der Längsträger (8) befestigt ist.

3. Gleitschalungsfertiger nach Anspruch 1 oder 2, **dadurch gekennzeichnet, dass** die Schiebetraverse (22) eine im wesentlichen in der Ebene des Maschinenrahmens (4) verschwenkbare Schwenkeinrichtung (24) für eine Fördereinrichtung (28) trägt.

4. Gleitschalungsfertiger nach Anspruch 3, **dadurch gekennzeichnet, dass** die Schwenkeinrichtung (24) für die Fördereinrichtung (28) auf der Schiebetraverse (22) quer zur Arbeitsrichtung verschlebbar angeordnet ist.

5. Gleitschalungsfertiger nach einem der Ansprüche 3 oder 4, **dadurch gekennzeichnet, dass** die Schwenkeinrichtung (24) für die Fördereinrichtung (28) aus einer Parallelogrammführung besteht.

6. Gleitschalungsfertiger nach einem der Ansprüche 3 bis 5, **dadurch gekennzeichnet, dass** die Fördereinrichtung (28) an dem freien Ende der Schwenkeinrichtung (24) für die Fördereinrichtung (28) um eine orthogonal zur Ebene des Maschinenrahmens verlaufende Achse schwenkbar gelagert ist.

7. Gleitschalungsfertiger nach einem der Ansprüche 3 bis 6, **dadurch gekennzeichnet, dass** die Fördereinrichtung (28) an dem freien Ende der Schwenkeinrichtung (24) für die Fördereinrichtung (28) zum Verändern des Neigungswinkels der Fördereinrichtung (28) um eine zu der Ebene des Maschinenrahmens (4) parallele Achse schwenkbar gelagert ist.

8. Gleitschalungsfertiger nach einem der Ansprüche 3 bis 7, **dadurch gekennzeichnet, dass** an dem freien Ende der Schwenkeinrichtung (24) für die Fördereinrichtung (28) ein Hilfsrahmen (26) angeordnet ist, in dem die Fördereinrichtung (28) linear gleitend in Längsrichtung verschiebbar ist.

9. Gleitschalungsfertiger nach einem der Ansprüche 3 bis 8, **dadurch gekennzeichnet, dass** die Fördereinrichtung (28) für den Transport durch Verschwenken eines unteren Teils (30) der Fördereinrichtung (28) auf eine geringere Baulänge verkürzbar ist.

10. Gleitschalungsfertiger nach einem der Ansprüche 1 bis 9, **dadurch gekennzeichnet, dass** an dem Maschinenrahmen (4) auf mindestens einer Seite ein quer zur Arbeitsrichtung teleskopierbarer Hilfsrahmen (48) zur Aufnahme von Arbeitsmitteln angeordnet ist.

11. Gleitschalungsfertiger nach Anspruch 10, **dadurch gekennzeichnet, dass** unter dem Maschinenrahmen (4) ein Zwischenrahmen (54) angeordnet ist.

12. Gleitschalungsfertiger nach Anspruch 11, **dadurch gekennzeichnet, dass** der Zwischenrahmen (54) um eine orthogonal zum Maschinenrahmen (4) verlaufende Achse um mindestens 180° verschwenkbar ist.

13. Gleitschalungsfertiger nach Anspruch 11 oder 12, **dadurch gekennzeichnet, dass** die Position des Zwischenrahmens (54) relativ zu dem Maschinenrahmen (4) in Arbeitsrichtung verstellbar ist.

14. Gleitschalungsfertiger nach Anspruch 11 bis 12, **dadurch gekennzeichnet, dass** der Hilfsrahmen (48) aus dem Zwischenrahmen (54) teleskopierbar ist.

15. Gleitschalungsfertiger nach einem der Ansprüche 1 bis 14, **dadurch gekennzeichnet, dass** die hinteren Fahrschiffe (15) am hinteren Ende des Maschinenrahmens (4) quer zur Arbeitsrichtung teleskopierbar sind.

16. Gleitschalungsfertiger nach einem der Ansprüche 1 bis 15, **dadurch gekennzeichnet, dass** zumindest die in Arbeitsrichtung vorderen Fahrschiffe (14) ein Lenkgetriebe (32) zum Verschwenken der Kettenlaufwerke (16) aufweisen, wobei der aus der Mittellage in Arbeitsrichtung einstellbare Lenkwinkel einen Betrag von +/- 50° bis 60°, vorzugsweise +/- 75°, überschreitet.

## Claims

1. A slip-form paver comprising a chassis (2) including a machine frame (4) provided with longitudinal beams (8) extending in parallel to the working direction and with transverse beams (18,20), the plane of the machine frame (4) being held in a predetermined position by means of lifting columns (10), and a slidable traverse member (22) being mounted to at least one transverse beam (20) of the machine frame (4) in a manner allowing for displacement transversely to the working direction,
**characterized in**
**that** the chassis (2) adjustable in height by means of a lifting column (10) comprises a plurality of truck assemblies (14,15) provided with steerable tracks (16), and
**that** the front truck assemblies (14) in the working direction are articulated to the outer ends of the slidable traverse member (22) by means of a respective pivoting device (17) configured in the manner of a parallelogram, so that the pivoting devices (17) allow for the adjustment of various track widths between the front truck assemblies (14).

2. The slip-form paver according to claim 1, **characterized in that** the longitudinal beams (8) are arranged to be telescoped and that the front transverse beam (20) in the working direction is mounted to the free ends of the longitudinal beams (8).

3. The slip-form paver according to claim 1 or 2, **characterized in that** the slidable traverse member (22) carries a pivoting device (24) which is pivotable substantially in the plane of the machine frame (4) and is provided to have a conveyer means (28) attached thereto.

4. The slip-form paver according to claim 3, **characterized in that** the pivoting device (24) for the conveyer means (28) is arranged on the slidable traverse member (22) for displacement transversely to the working direction.

5. The slip-form paver according to any one of claims 3 or 4, **characterized in that** the pivoting device (24) for the conveyer means (28) comprises a parallelogram guiding means.

6. The slip-form paver according to any one of claims 3 to 5, **characterized in that** the conveyer means (28) is supported, on the free end of the pivoting device (24) for the conveyer means (28), to be pivoted about an axis extending orthogonally to the plane of the machine frame.

7. The slip-form paver according to any one of claims 3 to 6, **characterized in that** the conveyer means (28) is pivotally supported, on the free end of the pivoting device (24) for the conveyer means (28), for changing the angle of inclination of the conveyer means (28) about an axis extending in parallel to the plane of the machine frame (4).

8. The slip-form paver according to any one of claims 3 to 7, **characterized in that** the free end of the pivoting device (24) for the conveyer means (28) is provided with an auxiliary frame (26) in which the conveyer means (28) can be displaced in a linear sliding movement in the longitudinal direction.

9. The slip-form paver according to any one of claims 3 to 8, **characterized in that**, for transport purposes, the conveyer means (28) can be shortened to a reduced constructional length by pivoting a lower portion (30) of the conveyer means (28).

10. The slip-form paver according to any one of claims 1 to 9, **characterized in that** the machine frame (4) can at least on one side be provided with an auxiliary frame (48) arranged to be telescoped transversely to the working direction and provided for attachment of working devices.

11. The slip-form paver according to claims 10, **characterized in that** an intermediate frame (54) is arranged below the machine frame (4).

12. The slip-form paver according to claim 11, **characterized in that** the intermediate frame (54) is pivotable by at least 180° about an axis extending orthogonally to the machine frame (4).

13. The slip-form paver according to claim 11 or 12, **characterized in that** the position of the intermediate frame (54) is adjustable relative to the machine frame (4) in the working direction.

14. The slip-form paver according to claim 11 or 12, **characterized in that** the auxiliary frame (48) can be telescoped out of the intermediate frame (54).

15. The slip-form paver according to any one of claims 1 to 14, **characterized in that** the rear truck assemblies (15) on the rear end of the machine frame (4) can be telescoped transversely to the working direction.

16. The slip-form paver according to any one of claims 1 to 15, **characterized in that** at least the front truck assemblies (14) in the working direction are provided with a steering gear mechanism (32) for pivoting the tracks (16), with the steering angle, to be set relative to the central position in the working direction, being larger than an amount of ± 50° to 60°, preferably ± 75°.

## Revendications

1. Machine à coffrage glissant comprenant un châssis roulant (2) qui comporte un bâti de machine (4) comprenant des longerons (8) s'étendant parallèlement à la direction de travail, et des traverses (18, 20), le plan du bâti de machine (4) étant maintenu dans une position prédéterminée, à l'aide de colonnes élévatrices (10), et une traverse coulissante (22), mobile transversalement par rapport à la direction de travail, étant fixée sur au moins une traverse (20) du bâti de machine (4),
**caractérisée en ce que** le châssis roulant (2) réglable en hauteur à l'aide des colonnes élévatrices (10) comporte plusieurs ensembles de roulement (14, 15) comprenant des trains de roulement à chenilles orientables (16), et
**en ce que** les ensembles de roulement avant (14), vus dans la direction de travail, sont articulés au niveau des extrémités extérieures de la traverse coulissante (22), respectivement à l'aide d'un mécanisme de pivotement (17) du type à parallélogramme, de sorte que les mécanismes de pivotement (17) permettent le réglage d'écartements différents entre les ensembles de roulement avant (14).

2. Machine à coffrage glissant selon la revendication 1, **caractérisée en ce que** les longerons (8) sont télescopiques et **en ce que** la traverse avant (20), vue dans la direction de travail, est fixée sur les extrémités libres des longerons (8).

3. Machine à coffrage glissant selon la revendication 1 ou 2, **caractérisée en ce que** la traverse coulissante (22) supporte un mécanisme de pivotement (24) prévu pour un dispositif transporteur (28) et orientable essentiellement dans le plan du bâti de machine (4).

4. Machine à coffrage glissant selon la revendication 3, **caractérisée en ce que** le mécanisme de pivotement (24), prévu pour le dispositif transporteur (28), est disposé sur la traverse coulissante (22), mobile transversalement par rapport à la direction de travail.

5. Machine à coffrage glissant selon la revendication 3 ou 4, **caractérisée en ce que** le mécanisme de pivotement (24) prévu pour le dispositif transporteur (28) se compose d'un guidage à parallélogramme.

6. Machine à coffrage glissant selon l'une des revendications 3 à 5, **caractérisée en ce que** le dispositif transporteur (28) est monté sur l'extrémité libre du mécanisme de pivotement (24) prévu pour le dispositif transporteur (28), de manière à pouvoir pivoter autour d'un axe s'étendant de façon orthogonale par rapport au plan du bâti de machine.

7. Machine à coffrage glissant selon l'une des revendications 3 à 6, **caractérisée en ce que** le dispositif transporteur (28) est monté sur l'extrémité libre du mécanisme de pivotement (24) prévu pour le dispositif transporteur (28), de manière à pouvoir pivoter autour d'un axe parallèle au plan du bâti de machine (4), pour modifier l'angle d'inclinaison du dispositif transporteur (28).

8. Machine à coffrage glissant selon l'une des revendications 3 à 7, **caractérisée en ce qu'**un bâti auxiliaire (26) est disposé sur l'extrémité libre du mécanisme de pivotement (24) prévu pour le dispositif transporteur (28), bâti auxiliaire dans lequel le dispositif transporteur (28) est mobile de façon linéaire en glissant dans la direction longitudinale.

9. Machine à coffrage glissant selon l'une des revendications 3 à 8, **caractérisée en ce que** le dispositif transporteur (28) peut, pour le transport, être raccourci, à une longueur de construction plus faible, par pivotement d'une partie inférieure (30) du dispositif transporteur (28).

10. Machine à coffrage glissant selon l'une des revendications 1 à 9, **caractérisée en ce qu'**un bâti auxiliaire (48), télescopique transversalement par rapport à la direction de travail et servant à la réception de moyens de travail, est disposé sur le bâti de machine (4), sur au moins un côté.

11. Machine à coffrage glissant selon la revendication 10, **caractérisée en ce qu'**un bâti intermédiaire (54) est disposé au-dessous du bâti de machine (4).

12. Machine à coffrage glissant selon la revendication 11, **caractérisée en ce que** le bâti intermédiaire (54) peut pivoter d'au moins 180°, autour d'un axe s'étendant de façon orthogonale par rapport au bâti de machine (4).

13. Machine à coffrage glissant selon la revendication 11 ou 12, **caractérisée en ce que** la position du bâti intermédiaire (54), par rapport au bâti de machine (4), est réglable dans la direction de travail.

14. Machine à coffrage glissant selon revendication 11 à 12, **caractérisée en ce que** le bâti auxiliaire (48) est télescopique par rapport au bâti intermédiaire (54).

15. Machine à coffrage glissant selon l'une des revendications 1 à 14, **caractérisée en ce que** les ensembles roulants arrière (15) sont télescopiques au niveau de l'extrémité arrière du bâti de machine (4), transversalement par rapport à la direction de travail.

16. Machine à coffrage glissant selon l'une des revendications 1 à 15, **caractérisée en ce qu'**au moins les ensembles roulants avant (14), dans la direction de travail, présentent un mécanisme de direction (32) servant à faire pivoter les trains de roulement à chenilles (16), l'angle de braquage réglable dans la direction de travail, à partir de la position moyenne, dépassant une valeur de +/- 50° à 60°, de préférence de +/- 75°.
